# EUROPEAN PATENT SPECIFICATION

(11) **EP 2 595 495 B1**
(45) Date of publication and mention of the grant of the patent: **18.01.2017**
(21) Application number: 11741719.6
(22) Date of filing: 18.07.2011
(51) Int. Cl.: A23B 4/037, A23G 3/34, A23L 3/44, A23P 20/20, A23P 20/25, A23P 30/25

(54) **TEXTURED, FREEZE-DRIED PRODUCTS AND METHODS FOR MAKING SAME**
TEXTURIERTE LYOPHILISIERTE PRODUKTE UND VERFAHREN ZU IHRER HERSTELLUNG
PRODUITS LYOPHILISÉS TEXTURÉS ET PROCÉDÉS DE FABRICATION DE CES DERNIERS

(30) Priority: 19.07.2010 US 365481 P
(43) Date of publication of application: 29.05.2013
(73) Proprietor: Nestec S.A., 1800 Vevey (CH)
(72) Inventor: SCHALLER, Raphael, Spring Lake Michigan 49456 (US); HARTLIEP, Barbara Burzinski, Spring Lake Michigan 49456 (US)
(74) Representative: Rupp, Christian
(86) International application number: PCT/US2011/044405
(87) International publication number: WO 2012/012350

(56) References cited:
- EP-A1- 1 099 387
- US-A- 3 579 360
- US-A1- 2005 158 428
- US-A1- 2010 047 400

## Description

### BACKGROUND

The present disclosure relates generally to food technologies. More specifically, the present disclosure relates to textured, dual component freeze-dried products and methods of making same.

Dual component food products are known in the food industry and are typically produced using known coextrusion or codepositing apparatuses. As such, many dual component food products on the market share similar characteristics and properties, and suffer from a limited number of characteristics to distinguishing the two components of the dual food product. Accordingly, consumers may become bored and unexcited about the aesthetics of typical dual component food products. In turn, companies who manufacture such dual component food products may suffer from increased expenditures for marketing purposes in response to an overall decrease in the purchasing of such products. In addition, companies may seek more cost- and labor-efficient methods for manufacturing more appealing food products.

EP 1 099 387 A1 discloses a process for producing a freeze-dried product in a bonded or stratified state by stratifying materials of the same or different kind to be treated into a multilayer under interposition of dry ice partly in between the layers; pressing the multilayer from both sides by pressurizing elements and under intermediation by dry ice and to effect bonding of the materials to be treated with each other, while, at the same time, freezing the multilayer; and subjecting the frozen product to vacuum drying. EP 1 099 387 A1 also discloses an apparatus therefor and a freeze-dried products obtained therefrom.

US 3,579,360 discloses porous composite materials, consisting of a continuous phase and a disperse phase in intimate association with the continuous phase, which may be obtained by freeze-drying techniques. The materials may be prepared either by freeze-drying a first solution, impregnating the dry material with a second solution and again freeze drying, or by freeze-drying a system consisting of two solutes dissolved in different solvents which may be immiscible. Freeze-drying of both aqueous and non-aqueous systems is envisaged in US 3,579,360.

US 2005/0158428 A1 discloses a stuffed edible food product and methods and apparatus for making the stuffed edible food product. US 2005/0158428 A1 teaches that the stuffed edible food product can be lyophilized and can include an edible article with a wall structure at least partially defining at least one void and an edible filling positioned within the at least one void. The method disclosed in US 2005/0158428 A1 can include reducing the puncture resistance of the wall structure, introducing the edible filling into the at least one void and lyophilizing the stuffed food product.

### SUMMARY

Textured, freeze-dried food products are provided. Methods of making the food products are also provided. In a general embodiment, the present disclosure provides food products having an outer component that surrounds an inner component to form a food product. The entire product is freeze-dried and the outer component and the inner component are visibly distinguishable.

In an embodiment, the outer component completely surrounds the inner component such that the inner component is not visible on an outer surface of the food product. The outer component serves as a shell, while the inner component is a filling component within the shell.

In an embodiment, the outer component is selected from the group consisting of a yogurt or other dairy product, a puree, a cereal product, a cheese, a fruit, a vegetable, a meat, a malt, a chocolate, coffee, fish or other seafood, or combinations thereof. The inner component may be selected from the group consisting of a yogurt or other dairy product, a puree, a cereal product, a cheese, a fruit, a vegetable, a meat, a malt, a chocolate, coffee, fish or other seafood, or combinations thereof.

In an embodiment, the color, texture, and flavor of the outer component may be different from the color, texture, and flavor of the inner component, respectively.

In an embodiment, the food product is dissolvable. The food product may have a water content below about 2%, and the food product may have a volume between about 500 and about 3000 mm³.

In another embodiment, a food product is provided and includes a first component and a second component that form a food product. The entire food product is freeze-dried and the first component and the second component are visibly distinguishable.

In an embodiment, the first and second components are both visible on an outer surface of the food product. The first and second components may form, for example, a marbleized design on the outer surface of the food product, or a swirl design on the outer surface of the food product.

In an embodiment, the first component is selected from the group consisting of a yogurt or other dairy product, a puree, a cereal product, a cheese, a fruit, a vegetable, a meat, a malt, a chocolate, coffee, fish or other seafood, or combinations thereof. The second component may be selected from the group consisting of a yogurt or other dairy product, a puree, a cereal product, a cheese, a fruit, a vegetable, a meat, a malt, a chocolate, coffee, fish or other seafood, or combinations thereof.

In an embodiment, the color, texture, and flavor of the first component may be different from the color, texture, and flavor of the second component, respectively.

In an embodiment, the food product is dissolvable. The food product may have a water content below about 2%, and the food product may have a volume between about 500 and about 3000 mm³.

In yet another embodiment, methods for making a food product is provided. The methods include codepositing a first component and second component at a temperature below about 10 °C to form a product, cooling the product to a temperature below about -5 °C, and subjecting the product to a sublimation step for a predetermined amount of time and at a predetermined pressure.

In an embodiment, the first component is selected from the group consisting of a yogurt or other dairy product, a puree, a cereal product, a cheese, a fruit, a vegetable, a meat, a malt, a chocolate, coffee, fish or other seafood, or combinations thereof. The second component may be selected from the group consisting of a yogurt or other dairy product, a puree, a cereal product, a cheese, a fruit, a vegetable, a meat, a malt, a chocolate, coffee, fish or other seafood, or combinations thereof.

In an embodiment, the codepositing occurs at a temperature from about -5 °C to about 10 °C.

In an embodiment, the first and second components are viscous components having a viscosity between about 5 and about 600 Pas.

In an embodiment, the predetermined amount of time for the sublimation step is about 5 to about 20 hours. The predetermined pressure may be from about 0.1 to about 1.0 mbar.

In an embodiment, the sublimation step includes heating the product at a temperature between about 50 °C and 120 °C. The final temperature of the product after sublimation may be between about 20 °C and 80 °C.

In an embodiment, the methods further include codepositing the first and second components onto a flat surface.

In an embodiment, the methods further include aerating the first component and/or the second component prior to the codepositing step.

In still yet another embodiment, methods of making a food product are provided. The methods include preparing a first viscous component, preparing a second viscous component, aerating the first component and/or the second component, codepositing the first component and second component to form a product, freezing the product, and subjecting the product to a sublimation step for a predetermined amount of time and at a predetermined pressure.

In an embodiment, the first component is selected from the group consisting of a yogurt or other dairy product, a puree, a cereal product, a cheese, a fruit, a vegetable, a meat, a malt, a chocolate, coffee, fish or other seafood, or combinations thereof. The second component may be selected from the group consisting of a yogurt or other dairy product, a puree, a cereal product, a cheese, a fruit, a vegetable, a meat, a malt, a chocolate, coffee, fish or other seafood, or combinations thereof.

In an embodiment, the codepositing occurs at a temperature from about -5 °C to about 10 °C.

In an embodiment, the first and second viscous components have a viscosity between about 5 and about 600 Pas.

In an embodiment, the predetermined amount of time is about 5 to about 20 hours. The predetermined pressure may be about 0.1 to about 1.0 mbar.

In an embodiment, the sublimation step includes heating the product at a temperature between about 50 °C and 120 °C. The final temperature of the product after sublimation may be between about 20 °C and 80 °C.

In an embodiment, the methods further include codepositing first and second components onto a flat surface.

An advantage of the present disclosure is to provide an improved dual component food product.

Another advantage of the present disclosure is to provide a texturized, freeze-dried food product.

Yet another advantage of the present disclosure is to provide a texturally appealing food product.

Another advantage of the present disclosure is to provide a visibly appealing food product.

Still yet another advantage of the present disclosure is to provide improved methods of making a dual component food product.

Additional features and advantages are described herein, and will be apparent from, the following Detailed Description and the figures.

### BRIEF DESCRIPTION OF THE FIGURES

FIG. 1 is a front view of a dual component food product in accordance with an embodiment of the present disclosure.
FIG. 2 is a cross-sectional view of a dual component food product of FIG. 1 in accordance with an embodiment of the present disclose and taken along line II-II of FIG. 1.
FIG. 3 is a front view of a dual component food product in accordance with an embodiment of the present disclosure.
FIG. 4 is a cross-sectional view of a dual component food product of FIG. 3 in accordance with an embodiment of the present disclose and taken along line IV-IV of FIG. 3.
FIG. 5 is a front view of a dual component food product in accordance with an embodiment of the present disclosure.
FIG. 6 is a cross-sectional view of a dual component food product of FIG. 5 in accordance with an embodiment of the present disclose and taken along line VI-VI of FIG 5.

### DETAILED DESCRIPTION

The present disclosure is generally directed to food technology. More specifically, the present disclosure is directed to co-deposited, freeze-dried food products, as well as methods of making same. Freeze-drying is a dehydration process typically used to preserve a perishable material or make the material more convenient for transport. Freeze-drying works by freezing the material and then reducing the surrounding pressure and adding enough heat to allow the frozen water in the material to sublime directly from the solid phase to the gas phase. In a general embodiment, the food products have a first component and a second component that are disposed adjacent one another. The first and second components may be the same or different materials and may have any number of distinguishable characteristics including, but not limited to, flavor, color, texture, amount, optical properties, etc.

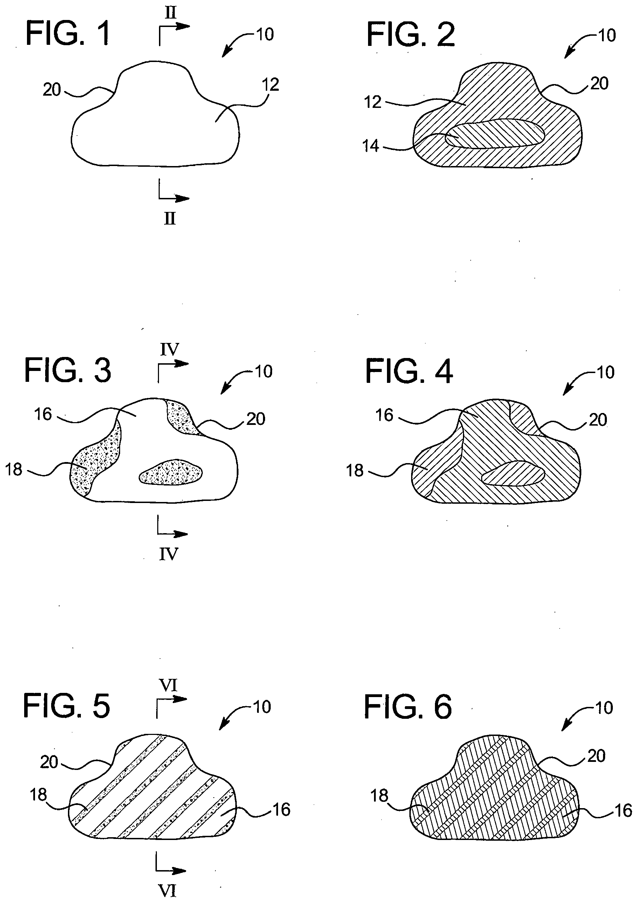

As shown in FIG. 1, an embodiment of a dual component food product of the present disclosure is generally designated by the numeral 10. The dual component food product 10 includes an outer component 12 and an inner component 14, as is shown by the cross-sectional view in FIG. 2. Although the food product 10 is shown in FIG. 1 as including inner component 14, the skilled artisan will appreciate that the food product 10 need not necessarily contain inner component 14. In such an embodiment, the food product 10 will still be a texturized, freeze-dried food product. As shown in FIG. 1, the food product 10 assumes a substantially hemispherical configuration having a tip portion 20 at the top of food product 10. However, while food product 10 is shown in a substantially hemispherical configuration, the skilled artisan will appreciate that other geometric shapes are possible. For example, food product 10 may be substantially oval, circular, square, triangular or other various geometric shapes. In an embodiment, food product 10 may have a substantially oblong shape (not shown). In other words, food product 10 may have an elongated shape with substantially curved sides. In yet another embodiment, food product 10 may have an elongated cylindrical shape so as to form an elongated food product in the shape of a stick (not shown).

As will be discussed herein below, however, an advantage provided by the present food product 10 and methods of making same is that food product 10 need not have a predefined shape imparted by the use of a mold, as is required by typical food products. Instead, the present food products 10 may be formed simply by co-depositing the outer component 12 with the inner component 14 onto a flat surface. The use of such a manufacturing process provides reduced costs in preparation of the products, as well as reduced labor, faster manufacturing times, and reduction in potential manufacturing complications. In an alternative embodiment, however, the skilled artisan will appreciate that a mold may be used, although is not required, if a different or specific shape of food product 10 is desired.

The outer and inner components 12, 14 of food product 10 may have unique properties or characteristics associated therewith. For example, as shown in the FIGS. 1 and 2, food product 10 may include an outer component 12 that substantially surrounds an inner component 14. In this embodiment, inner component 14 is not visible to a consumer until food product 10 is broken open to reveal an inner portion of food product 10. Indeed, in this embodiment, all that is seen by the consumer prior to breaking open food product 10 is outer component 12.

In another embodiment, however, food product 10 may include a marbleized appearance that is visible to the consumer prior to breaking open food product 10, as is shown by FIGS. 3 and 4. In this embodiment, a first component 16 and a second component 18 are both visible to a consumer, as is shown by FIG. 3. Similarly, when food product 10 is broken open, the cross-sectional view in FIG. 4 illustrates that first and second components 16, 18 are still visible to the consumer. FIGS. 5 and 6 illustrate yet another embodiment similar to the marbleized embodiment, wherein first component 16 and second component 18 are both visible to the consumer on the outside of food product 10 (FIG. 5) and on the inside of food product 10 (FIG. 6). However, first component 16 and second component 18 form a swirl design in FIG. 5, as opposed to the marbleized design of FIG. 3. Accordingly, the skilled artisan will appreciate that other combinations of first and second components 16, 18 are possible and that the present disclosure is not limited to the embodiments disclosed herein.

The dual component food products 10 of the present disclosure may have different outer components 12 and inner components 14. Similarly, the dual component food products 10 of the present disclosure may have different first and second components 16, 18. Going forward, for convenience, "first component" will be used to refer to both the outer component 12 and first component 16, while "second component" will be used to refer to both the inner component 14 and second component 18.

In an embodiment, the material of first component 12, 16 and second component 14, 18, may be different. For example, first component 12, 16 may be a yogurt or other dairy product, a puree, a cereal product, a cheese, a fruit, a vegetable, a meat, a malt, chocolate, coffee, fish or other seafood, or combinations thereof. Similarly, first component 12, 16 may also be a food composition that is flavored. First component 12, 16 may include, a flavoring selected from the group consisting of, for example, butter, nut, vanilla, fruit, herb, spice, or combinations thereof. Similarly, first component 12, 16 may also include, for example, inclusions selected from the group consisting of fruit pieces, herbs, spices, vegetables, cheeses, confectionery materials, or combinations thereof.

In an embodiment wherein second component 14, 18 is different from first component 12, 16, second component 14, 18 may be a yogurt or other dairy product, a puree, a cereal product, a cheese, a fruit, a vegetable, a meat, a malt, chocolate, coffee, fish or other seafood, or combinations thereof. Similarly, second component 14, 18 may also be a food composition that is flavored. Second component 14, 18 may include, but is not limited to, flavorings selected from the group consisting of butter, nut, vanilla, fruit, herb, spice, or combinations thereof. Similarly, second component 14, 18 may also include, for example, inclusions selected from the group consisting of fruit pieces, herbs, spices, vegetables, cheeses, confectionery materials, or combinations thereof.

Typical meat components may include, but are not limited to, poultry, beef, pork, fish, or combinations thereof. Cheese components may include, but are not limited to, american, swiss, cheddar, blue, colby, brie, or combinations thereof. Fruit components may include any known fruit such as, but not limited to, apples, bananas, coconut, pear, apricot, peach, nectarines, plum, cherry, blackberry, raspberry, mulberry, strawberry, cranberry, blueberry, grapes, grapefruit, kiwi, rhubarb, papaya, melon, watermelon, pomegranate, lemon, lime, mandarin, orange, tangerine, guava, mango, pineapple, etc. Vegetable components include any known vegetable such as, but not limited to, amaranth, arugula, brussels sprouts, cabbage, celery lettuce, radicchio, water cress, spinach mushrooms, peas, beans, beets, carrots, potatoes, radish, rutabaga, turnips, etc. Various other components may include, for example, cereals, malts, chocolate, coffee, cacao, and other various dairy products such as, but not limited to, yogurt or kefir.

In an embodiment, first component 12, 16 is yogurt, second component 14, 18 is a strawberry puree, and both first component 12, 16 and second component 14, 18 are aerated prior to codeposition. By providing two different components in the present food products 10, the skilled artisan will appreciate that the food products 10 may also provide a wide variety of taste sensations including, for example, sweet, savory, bitter, sour, salty, or combinations thereof.

To further distinguish first component 12, 16 from second component 14, 18, different colorings may be used. The food colorings may be a natural food coloring, or may be an artificial food coloring. For example, in an embodiment wherein a naturally white colored yogurt is used as a first component and a naturally red colored strawberry puree is used as a second component, food product 10 will have a red component contained entirely within, marbleized with, or swirled with a white component, depending on the desired aesthetics of the final product. Alternatively, if the same naturally white yogurt first component is dyed green using an artificial green food coloring, food product 10 will have a red component contained entirely within, marbleized with, or swirled with a green component. Accordingly, the skilled artisan will appreciate that any known coloring scheme may be used with food products 10 to distinguish first component 12, 16 from second component 14, 18.

In addition to the use of different colors for the components of food product 10, the use of different material properties may also be used for the components of food product 10. In this manner, first component 12, 16 may be made of a material having different optical properties than second component 14, 18. For example, either or both of first component 12, 16 and second component 14, 18 may be made of transparent, translucent or opaque materials. In the field of optics, transparency is the physical property of allowing light to pass through a material, while translucency only allows light to pass through diffusely. Opacity is the opposite property of transparency. Transparent materials are clear, while translucent ones cannot be seen through clearly, and opaque materials cannot be seen through at all.

Food product 10 according to the present disclosure may also provide distinct appearances by varying the amount of first component 12, 16 with respect to second component 14, 18. For example, the ratio of first component 12, 16 to second component 14, 18 may be 1:1. In another embodiment, the ratio may be 1:2, and vice versa. In yet another embodiment, the ratio may be 1:3, 1:4, 1:5, etc. Accordingly, the skilled artisan will appreciate that the ratio of first component 12, 16 to second component 14, 18 will vary depending on the desired appearance of food product 10.

Further, food product 10 according to the present disclosure may provide distinct textures and dissolvable properties by aerating or not aerating specific components of food product 10 prior to coextrusion or codeposition. Going forward, and for convenience, "codeposition" will be used with respect to the present process by which food products 10 are prepared. However, the skilled artisan will appreciate that other processes such as, for example, coextrusion may be used. In an embodiment, first component 12, 16 is aerated and is combined with second component 14, 18, which is not aerated, during codeposition. In another embodiment, first component 12, 16 is not aerated and is combined with second component 14, 16, which is aerated, during codeposition. Alternatively, both first component 12, 16 and second component 14, 18 may be aerated, or both first component 12, 16 and second component 14, 18 are not aerated. Accordingly, food product 10 may be provided with several different textural properties and may also be dissolvable.

The present disclosure also provides methods of making food product 10. As discussed above, first component 12, 16 and second component 14, 18 are prepared separately prior to codeposition. Codeposition is carried out using any apparatus known in the art and capable of codepositing two separate streams of a product. For example, codeposition may be carried out using a coextruder apparatus that simultaneously extrudes a first outer casing around a second core component. Instead of extruding a tubular food product from a die of a coextruder, however, the food product having two components is deposited in individual portions onto a surface.

As is discussed above, either or both of first component 12, 16 and second component 14, 18 may be aerated. Additionally, first component 12, 16 and second component 14, 18 are not liquid, but are in a viscous state prior to and at the time of codeposition. For example, first component 12, 16 and second component 14, 18 may have a viscosity from about 5 Pas and 600 Pas at the time of codeposition.

Further, at the time of codeposition, when a stream of viscous first component 12, 16 and a stream of viscous second component 14, 18 contact, there exists no significant difference in temperature between the two components. For example, in an embodiment, the two streams have a temperature that is less than about 10 °C. In another embodiment, the two streams are contacted at a temperature from about -5 °C to about 10 °C.

When the two streams of first component 12, 16 and second component 14, 18 meet during codeposition, the combined streams may be codeposited on a flat surface to form a product without the use of a mold. Alternatively, however, the skilled artisan will appreciate that a mold may be used if a specific shape were desired for a final product. Once the combined streams are codeposited to form a product, the product has a density of about 0.25 to about 1.5 g/ml. In an embodiment, the product has a density of about 0.5 to about 1.2 g/ml. The shape of the product on the flat surface may further be stabilized by cooling the temperature of the product to less than about -5 °C. In an embodiment, the product has a hardness that is between about 30 and about 120 N when the temperature is between about -5 °C and about -25 °C.

To remove water from typical codeposited products, evaporation and heating are typically used. However, Applicants have surprisingly found that a textured, co-deposited, freeze-dried product having unique characteristics may be formed by removing water using a sublimation step. Sublimation is the transition of a substance from the solid phase to the gas phase without passing through an intermediate liquid phase. Sublimation is an endothermic phase transition that occurs at temperatures and pressures below a substance's triple point in its phase diagram.

The sublimation step of the present disclosure usually takes from about 2 to about 25 hours to complete using a vacuum. In an embodiment, the sublimation step is carried out for about 5 hours to about 20 hours. In another embodiment, the vacuum applied during sublimation is between 0.1 and 1.0 mbar. During sublimation, the product is heated at a temperature from about 50 to about 120 °C. At the end of the sublimation step, the temperature of the final product is about 20 to about 80 °C.

Applicants have surprisingly found that a freeze-dried product may be obtained by using sublimation, wherein the final product has a water content below about 2%. In an embodiment, the final product has a water content of about 1%. Applicants have also found that such a manufacturing method also provides a product with a volume between about 500 and about 3,000 mm³. In an embodiment, the volume of the final product is between about 1,000 and about 2,500 mm³. In yet another embodiment, the volume of the final product is about 1,500 mm³.

The use of the manufacturing procedures described herein above provide food products of the present disclosure with unique and novel characteristics. Further, the manufacturing procedures described herein provide a more cost-effective and efficient manner in which to manufacture the food products. Indeed, cost-saving and efficiency promoting steps of the present methods include, for example, co-depositing of the first and second components in viscous conditions and at the same temperature comprised below 10 °C and in one shot, and shaping of the food product without the use of a mold, as is typically required with similar food products. Accordingly, by using the unique and novel manufacturing steps described herein, Applicants are able to provide an aesthetically appealing and unique texturized, co-deposited, freeze-dried product.

## Claims

1. A food product comprising:
a first component and a second component that form a food product, wherein the entire food product is freeze-dried, the food product has a water content below about 2% and the first component and the second component are visibly distinguishable;
wherein the first component is selected from the group consisting of a yogurt or other dairy product, a puree, a cereal product, a cheese, a fruit, a vegetable, a meat, a malt, a chocolate, coffee, fish or other seafood, and combinations thereof; and
wherein the second component is selected from the group consisting of a yogurt or other dairy product, a puree, a cereal product, a cheese, a fruit, a vegetable, a meat, a malt, a chocolate, coffee, fish or other seafood, and combinations thereof,
**characterized in that** the first and the second component are co-deposited by co-extrusion,
and
the first component surrounds the second component.

2. The food product of Claim 1, wherein:
the color of the second component is different from the color of the first component;
the texture of the second component is different from the texture of the first component; or
the flavor of the second component is different from the flavor of the first component; or combinations thereof.

3. The food product of Claim 1, wherein at least one of the first component and the second component is a dairy product, such as e.g. a yogurt.

4. The food product of Claim 1, wherein at least one of the first component and the second component is a fruit puree, or wherein at least one of the first component and the second component is vegetable puree.

5. The food product of Claim 1, wherein the food product has a volume between about 500 and about 3000 mm³.

6. The food product of Claim 1, wherein the first component completely surrounds the second component such that the second component is not visible on an outer surface of the food product.

7. The food product of Claim 1, wherein the first and second components form a marbleized design on the outer surface of the food product, or wherein the first and second components form a swirl design on the outer surface of the food product.

8. A method of making a freeze-dried food product, the method comprising:
- co-extruding a first component and a second component to form a product, wherein the co-extruding occurs at a temperature from about -5 °C to about 10 °C, and wherein the first component surrounds the second component;
- cooling the product to a temperature below about -5 °C; and
- subjecting the product to a sublimation step for about 5 hours to about 20 hours and at a pressure of about 0.1 to about 1.0 mbar, wherein the sublimation step comprises heating the product at a temperature between about 50 °C and 120 °C; and
wherein the first component is selected from the group consisting of a yogurt or other dairy product, a puree, a cereal product, a cheese, a fruit, a vegetable, a meat, a malt, a chocolate, coffee, fish or other seafood, and combinations thereof; and
wherein the second component is selected from the group consisting of a yogurt or other dairy product, a puree, a cereal product, a cheese, a fruit, a vegetable, a meat, a malt, a chocolate, coffee, fish or other seafood, and combinations thereof.

9. The method of Claim 8, wherein a final temperature of the product after sublimation is between about 20 °C and about 80 °C.

10. The method of Claim 8, further comprising co-extruding first and second components onto a flat surface.

11. The method of Claim 8, further comprising aerating the first component and/or the second component prior to the co-extruding step.

12. The method of Claim 8, further comprising prior to the co-extruding step:
preparing a first viscous component; preparing a second viscous component;
aerating at least one of the first component or the second component.

## Patentansprüche

1. Lebensmittelprodukt, welches Folgendes umfasst:
eine erste Komponente und eine zweite Komponente, die ein Lebensmittelprodukt bilden, wobei das gesamte Lebensmittelprodukt gefriergetrocknet ist, wobei das Lebensmittelprodukt einen Wassergehalt unter etwa 2 % hat und die erste und die zweite Komponente sichtbar voneinander unterscheidbar sind;
wobei die erste Komponente ausgewählt ist aus der Gruppe bestehend aus einem Joghurt oder einem anderen Milchprodukt, einem Mus, einem Cerealienprodukt, einem Käse, einer Frucht, einem Gemüse, einem Fleisch, einem Malz, einer Schokolade, Kaffee, Fisch oder anderen Meeresfrüchten sowie Kombinationen davon; und
wobei die zweite Komponente ausgewählt ist aus der Gruppe bestehend aus einem Joghurt oder einem anderen Milchprodukt, einem Mus, einem Cerealienprodukt, einem Käse, einer Frucht, einem Gemüse, einem Fleisch, einem Malz, einer Schokolade, Kaffee, Fisch oder anderen Meeresfrüchten sowie Kombinationen davon,
**dadurch gekennzeichnet, dass** die erste und die zweite Komponente durch Co-Extrusion zusammen abgelagert werden,
und
die erste Komponente die zweite Komponente umgibt.

2. Lebensmittelprodukt nach Anspruch 1, wobei:
sich die Farbe der zweiten Komponente von der Farbe der ersten Komponente unterscheidet;
sich die Textur der zweiten Komponente von der Textur der ersten Komponente unterscheidet; oder
sich das Aroma der zweiten Komponente vom Aroma der ersten Komponente unterscheidet; oder Kombinationen davon.

3. Lebensmittelprodukt nach Anspruch 1, wobei mindestens eine von der ersten Komponente und der zweiten Komponente ein Milchprodukt, wie beispielsweise ein Joghurt, ist.

4. Lebensmittelprodukt nach Anspruch 1, wobei mindestens eine von der ersten Komponente und der zweiten Komponente ein Fruchtmus ist, oder wobei mindestens eine von der ersten Komponente und der zweiten Komponente ein Gemüsemus ist.

5. Lebensmittelprodukt nach Anspruch 1, wobei das Lebensmittelprodukt ein Volumen zwischen etwa 500 und etwa 3000 mm³ aufweist.

6. Lebensmittelprodukt nach Anspruch 1, wobei die erste Komponente die zweite Komponente dergestalt vollständig umgibt, dass die zweite Komponente auf einer Außenoberfläche des Lebensmittelprodukts nicht sichtbar ist.

7. Lebensmittelprodukt nach Anspruch 1, wobei die erste und die zweite Komponente ein marmoriertes Design auf der Außenoberfläche des Lebensmittelprodukts bilden, oder wobei die erste und die zweite Komponente ein Wirbeldesign auf der Außenoberfläche des Lebensmittelprodukts bilden.

8. Verfahren zum Herstellen eines gefriergetrockneten Lebensmittelprodukts, wobei das Verfahren Folgendes umfasst:
- Co-Extrudieren einer ersten Komponente und einer zweiten Komponente zum Bilden eines Produkts, wobei das Co-Extrudieren bei einer Temperatur von etwa -5 °C bis etwa 10 °C erfolgt, und wobei die erste Komponente die zweite Komponente umgibt;
- Abkühlen des Produkts auf eine Temperatur unterhalb von etwa -5 °C; und
- Aussetzen des Produkts einem Sublimationsschritt für einen Zeitraum von etwa 5 Stunden bis etwa 20 Stunden, und bei einem Druck von etwa 0,01 kPa bis etwa 0,1 kPa (etwa 0,1 bis etwa 1,0 mbar), wobei der Sublimationsschritt das Aufwärmen des Produkts bei eine Temperatur von etwa 50 °C bis etwa 120 °C umfasst; und
wobei die erste Komponente ausgewählt ist aus der Gruppe bestehend aus einem Joghurt oder einem anderen Milchprodukt, einem Mus, einem Cerealienprodukt, einem Käse, einer Frucht, einem Gemüse, einem Fleisch, einem Malz, einer Schokolade, Kaffee, Fisch oder anderen Meeresfrüchten sowie Kombinationen davon; und
wobei die zweite Komponente ausgewählt ist aus der Gruppe bestehend aus einem Joghurt oder einem anderen Milchprodukt, einem Mus, einem Cerealienprodukt, einem Käse, einer Frucht, einem Gemüse, einem Fleisch, einem Malz, einer Schokolade, Kaffee, Fisch oder anderen Meeresfrüchten sowie Kombinationen davon.

9. Verfahren nach Anspruch 8, wobei eine endgültige Temperatur des Produkts nach der Sublimation zwischen etwa 20 °C und etwa 80 °C liegt.

10. Verfahren nach Anspruch 8, ferner umfassend das Co-Extrudieren der ersten und der zweiten Komponenten auf einer flachen Oberfläche.

11. Verfahren nach Anspruch 8, ferner umfassend das Belüften der ersten Komponente und/oder der zweiten Komponente vor dem Co-Extrusionsschritt.

12. Verfahren nach Anspruch 8, ferner vor dem Co-Extrusionsschritt Folgendes umfassend:
Zubereiten einer ersten viskosen Komponente; Zubereiten einer zweiten viskosen Komponente, Belüften von mindestens einem von der ersten Komponente oder der zweiten Komponente.

## Revendications

1. Produit alimentaire comprenant :
un premier composant et un deuxième composant qui forment un produit alimentaire, dans lequel le produit alimentaire entier est lyophilisé, le produit alimentaire a une teneur en eau inférieure à environ 2 % et le premier composant et le deuxième composant sont visuellement différentiables ;
dans lequel le premier composant est choisi dans le groupe constitué d'un yaourt ou autre produit laitier, d'une purée, d'un produit céréalier, d'un fromage, d'un fruit, d'un légume, d'une viande, d'un malt, d'un chocolat, de café, de poisson ou autre produit de la mer et des combinaisons de ceux-ci ; et
dans lequel le deuxième composant est choisi dans le groupe constitué d'un yaourt ou autre produit laitier, d'une purée, d'un produit céréalier, d'un fromage, d'un fruit, d'un légume, d'une viande, d'un malt, d'un chocolat, de café, de poisson ou autre produit de la mer et des combinaisons de ceux-ci,
**caractérisé en ce que** le premier et le deuxième composants sont co-déposés par co-extrusion
et
le premier composant entoure le deuxième composant.

2. Produit alimentaire selon la revendication 1, dans lequel :
la couleur du deuxième composant est différente de la couleur du premier composant ;
la texture du deuxième composant est différente de la texture du premier composant ; ou
la saveur du deuxième composant est différente de la saveur du premier composant ; ou des combinaisons de ceux-ci.

3. Produit alimentaire selon la revendication 1, dans lequel au moins un du premier composant et du deuxième composant est un produit laitier, comme par ex. un yaourt.

4. Produit alimentaire selon la revendication 1, dans lequel au moins un du premier composant et du deuxième composant est une purée de fruit ou dans lequel au moins un du premier composant et du deuxième composant est une purée de légumes.

5. Produit alimentaire selon la revendication 1, dans lequel le produit alimentaire a un volume entre environ 500 et environ 3000 mm³.

6. Produit alimentaire selon la revendication 1, dans lequel le premier composant entoure complètement le deuxième composant, de sorte que le deuxième composant ne soit pas visible sur une surface externe du produit alimentaire.

7. Produit alimentaire selon la revendication 1, dans lequel les premier et deuxième composants forment un motif marbré sur la surface externe du produit alimentaire ou dans lequel les premier et deuxième composants forment un motif de tourbillon sur la surface externe du produit alimentaire.

8. Procédé de préparation d'un produit alimentaire lyophilisé, le procédé comprenant :
- la co-extrusion d'un premier composant et d'un deuxième composant afin de former un produit, dans lequel la co-extrusion se produit à une température allant d'environ -5 °C à environ 10 °C et dans lequel le premier composant entoure le deuxième composant ;
- le refroidissement du produit à une température inférieure à environ -5 °C ; et
- le fait de soumettre le produit à une étape de sublimation pendant d'environ 5 heures à environ 20 heures et à une pression d'environ 0,01 kPa à environ 0,1 kPa (environ 0,1 à environ 1,0 mbar), dans lequel l'étape de sublimation comprend le chauffage du produit à une température allant d'environ 50 °C à 120 °C ; et
dans lequel le premier composant est choisi dans le groupe constitué d'un yaourt ou autre produit laitier, d'une purée, d'un produit céréalier, d'un fromage, d'un fruit, d'un légume, d'une viande, d'un malt, d'un chocolat, de café, de poisson ou autre produit de la mer et des combinaisons de ceux-ci ; et
dans lequel le deuxième composant est choisi dans le groupe constitué d'un yaourt ou autre produit laitier, d'une purée, d'un produit céréalier, d'un fromage, d'un fruit, d'un légume, d'une viande, d'un malt, d'un chocolat, de café, de poisson ou autre produit de la mer et des combinaisons de ceux-ci.

9. Procédé selon la revendication 8, dans lequel une température finale du produit après sublimation va d'environ 20 °C à environ 80 °C.

10. Procédé selon la revendication 8, comprenant en outre la co-extrusion des premier et deuxième composants sur une surface plate.

11. Procédé selon la revendication 8, comprenant en outre l'aération du premier composant et/ou du deuxième composant avant l'étape de co-extrusion.

12. Procédé selon la revendication 8, comprenant en outre, avant l'étape de co-extrusion :
la préparation d'un premier composant visqueux ; la préparation d'un deuxième composant visqueux ; l'aération d'au moins un parmi le premier composant ou le deuxième composant.
